# EUROPÄISCHE PATENTSCHRIFT

(11) **EP 3 336 521 B1**
(45) Veröffentlichungstag und Bekanntmachung des Hinweises auf die Patenterteilung: **10.04.2019**
(21) Anmeldenummer: 16204654.4
(22) Anmeldetag: 16.12.2016
(51) Int. Cl.: G01N 21/359, F26B 13/00, G01N 3/56, F26B 25/22, B29C 70/50, B32B 21/06, B32B 27/00, B32B 29/06, D06M 15/423, D21H 17/51, E04F 15/02, E04F 15/04, G01N 21/84

(54) **VERFAHREN ZUR BESTIMMUNG DES GEHALTES AN ANORGANISCHEN FESTSTOFFPARTIKELN IN EINER HARZLÖSUNG**
METHOD FOR DETERMINING THE CONTENT OF INORGANIC SOLID PARTICLES IN A RESIN SOLUTION
PROCÉDÉ DE DÉTERMINATION DE LA TENEUR EN PARTICULES SOLIDES ANORGANIQUES DANS UNE SOLUTION RÉSINEUSE

(43) Veröffentlichungstag der Anmeldung: 20.06.2018
(73) Patentinhaber: Flooring Technologies Ltd., Kalkara SCM1001 (MT)
(72) Erfinder: GEORGE, Maika, 16909 Heiligengrabe (DE); PFEIFFER, Sabrina, 16866 Kyritz (DE); DENK, Andre, 16909 Wittstock/Dosse (DE)
(74) Vertreter: Maikowski & Ninnemann Patentanwälte Partnerschaft mbB

(56) Entgegenhaltungen:
- EP-A1- 3 078 959
- WO-A1-2016/162196

## Beschreibung

Die vorliegende Erfindung betrifft ein Verfahren zur Bestimmung des Gehaltes von anorganischen Feststoffpartikeln in mindestens einer Harzlösung nach dem Oberbegriff des Anspruchs 1.

### Beschreibung

Holzwerkstoffplatten als Trägermaterialien werden in den verschiedensten Bereichen eingesetzt und sind weit verbreitet. So sind Holzwerkstoffplatten unter anderem aus der Verwendung als Fußbodenpaneele, z.B. in Form von Laminatböden, bekannt. Derartige Werkstoffplatten werden üblicherweise aus Holzfasern, Holzspänen oder Strands hergestellt. Im Falle von Laminatböden werden z.B. aus Holzfasern hergestellte HDF-Platten mit vielfältigen Dekoren verwendet.

Insbesondere im Falle der Verwendung von Holzwerkstoffplatten als Laminatböden ist es wünschenswert und notwendig, die dekorativen Oberflächen durch Aufbringen von geeigneten Verschleißschichten vor Abrieb und Abnutzung zu schützen. Als Verschleißschichten werden insbesondere aushärtbare Harze auf der Basis von Acrylharz, Epoxidharz oder Melaminharz verwendet. Zur Verbesserung der Eigenschaften hinsichtlich Verschleißfestigkeit und Kratzfestigkeit ist es bekannt, in diese Harzschichten geeignete Partikel in einem Größenbereich von 25 nm bis 150 µm einzulagern. Hierbei dienen die größeren Partikel der Verbesserung des Abriebwiderstandes und die kleineren Partikel der Verbesserung der Kratzfestigkeit. Als Partikel können z.B. Nanopartikel aus Siliziumkarbid, Siliziumdioxid oder α-Aluminiumoxid eingesetzt werden. Entsprechend ist bei der Produktion von Laminatfußböden die Ermittlung der Abriebfestigkeit der ausgehärteten Verschleißschicht ein entscheidendes Kriterium der Qualitätssicherung.

Im Allgemeinen besteht der Laminatfußboden aus vier Schichten (von oben nach unten betrachtet): transparente Verschleißschicht - Dekorschicht - Trägerplatte - Gegenzug.

Wie erwähnt, sind die Verschleiß- und Dekorschichten für die Widerstandsfähigkeit gegenüber der hohen Beanspruchung und das Aussehen der Oberfläche des Laminatfußbodens verantwortlich. Als Trägerplatte dient eine verleimte Holzfaserplatte, die das Weiterverarbeiten wie Schneiden bzw. Fräsen des Laminats möglich macht. Der Gegenzug besteht aus einer Harzschicht, welche als Feuchtigkeitssperre fungiert und die Spannungssymmetrie gewährleistet.

Für die Herstellung der Verschleißschicht auf einer Trägerplatte gibt es im Wesentlichen zwei Ansätze. So kann die Verschleißschicht aus einem Papieraufbau oder einem Flüssigaufbau bestehen. Im Falle eines Papieraufbaus wird die Verschleißschicht aus einem dünnen transparenten Papier gebildet, das mit einem duroplastischen Harz, wie z.B. einem Melamin-Formaldehyd-Harz und verschleißhemmenden Partikeln gefüllt ist. Im Fall des Flüssigaufbaus umfasst die Verschleißschicht eine flüssig aufgetragene Harzschicht, die ebenfalls verschleißhemmende Partikel, wie z.B. Korundpartikel sowie andere Hilfsstoffe, wie z.B. Glaskugeln oder Zellulose enthalten kann. Im Fall des Papieraufbaus wird die Verschleißschicht dann mit einem ebenfalls imprägnierten Dekorbogen auf die Oberseite einer Holzwerkstoffplatte aufgelegt oder im Falle des Flüssigaufbaus wird die verschleißhemmende Partikel enthaltende Harzschicht auf eine bereits grundierte und bedruckte Platte oder auch auf eine bereits auf der Platte angeordnete Papierlage in flüssiger Form aufgetragen und getrocknet.

Die Abriebfestigkeit dieser Verschleißschichten hängt hauptsächlich von der Menge der in die Verschleißschicht eingetragenen abriebfesten Partikel ab. Im Falle des Papieraufbaus werden die verschleißhemmenden Partikel auf das Papier während der Imprägnierung aufgestreut oder es wird eine Harzlösung, die verschleißhemmende Partikel enthält, aufgetragen oder aufgewalzt.

Im Falle einer Verschleißschicht im Flüssigaufbau werden die verschleißhemmenden Partikel zusammen mit dem flüssigen Harz auf eine bereits grundierte und bedruckte Platte aufgetragen und getrocknet. Ein derartiges Verfahren ist z.B. in der WO 2010/112125 A1 beschrieben. Bei diesem Verfahren werden hochdichte Faserplatten mit flüssigem Material in mehreren Aufträgen beschichtet. Dabei wird zunächst eine Grundierung mit MF-Harz erzeugt. Danach wird eine zweite Grundierung mit einer Farbe aufgetragen, die als Basis für den Dekortiefdruck dient. Anschließend wird durch mehrmaliges Auftragen des MF-Harzes, das nun verschleißhemmende Feststoffe beinhaltet, eine abriebfeste Schutzschicht erzeugt. Die aufgetragene und vorgetrocknete Beschichtung wird in einer Kurztaktpresse (KT- Presse) bei einer Presstemperatur von 195-205 °C und einer Presszeit von 8 bis 9 Sekunden unter einem spezifischem Druck von 40 kg/cm² (40 bar) zur Aushärtung gebracht.

Das Auftragen der Harzflotte, die flüssiges Melamin-Formaldehyd-Harz mit verschleißhemmenden Partikeln umfasst, erfolgt in einem Auftragssystem, das sich aus einem Auftragsbehälter und einem Auftragswerk zusammensetzt. Über ein Schlauch- und Pumpensystem wird der Ansatz vom Auftragsbehälter zum Auftragswerk bestehend aus Auftrags- und Dosierwalze gefördert. Der Ansatz wird gleichmäßig über die Auftrags- und Dosierwalze gegeben und durch einen definierten Spalt zwischen den beiden Walzen auf die Platte übertragen. Überschüssiger Ansatz wird (durch die Abstreifer an den Enden der Walzen) in Rücklaufrinnen zurück in den Auftragsbehälter gefördert. Im Verlaufe des (zyklischen) Auftragsprozesses kommt es allerdings zu einer Aufkonzentration an verschließhemmenden Partikel in der Harzlösung, die zum Beispiel durch Verdunstungserscheinungen bedingt werden.

Aus der Aufkonzentration der verschleißhemmenden Partikel ergeben sich folgende Probleme: Vergrauung der Oberfläche; Abpumpen des bestehenden Ansatzes verbunden mit Zusatzkosten; überschüssiger Einsatz an verschleißhemmenden Partikeln; mangelhafter Abrieb, da die verschleißhemmenden Partikel nicht auf der Platte verbleiben, sondern sich kontinuierlich im Auftragswerk ansammeln.

Um einen stabilen Prozess zu gewährleisten, ist es daher wünschenswert, den Gehalt an verschleißhemmenden Partikeln in der auf die Trägerplatten aufzutragenden Harzlösung möglichst konstant zu halten. Dies erfolgt in geeigneter Weise mittels der Bestimmung des Gehaltes an verschleißhemmenden Partikeln in der, sich im Auftragsbehälter befindlichen, Harzlösung.

Ein konventioneller Ansatz zur Bestimmung der verschleißhemmenden Partikeln in Harzlösungen ist die Veraschung. Dabei wird eine vorbestimmte Menge der feststoffhaltigen Harzlösung dem Auftragsbehälter entnommen und in einem Muffelofen beispielsweise bei 650°C für 6 Stunden erhitzt. Die organischen Bestandteile (Harz, Cellulose) der Probe werden dabei verascht und es bleibt nur der anorganische Teil (Korund) als Rückstand zurück.

Der Prozess der Veraschung erfordert somit lange Wartezeiten (bis zu 10 Stunden und mehr) bis ein erstes Ergebnis vorliegt. In dieser Zeit wird kontinuierlich weiterproduziert. Weitere Nachteile der Mengenbestimmung der Feststoffpartikel mittels Veraschung sind: Personalkosten; Gefahr durch Hitze beim Veraschen und durch die Säurenachbehandlung; Energiekosten; Verfälschung der Messergebnisse durch Wärmeexplosion der Probe; Zeitverlust durch Wartezeit, mangelnde Normkonformität der Platten.

EP 3078959 A1 und WO 2016/162196 A1 betreffen ein Verfahren zur Bestimmung der Abriebfestigkeit einer Holzwerkstoffplatte. Die Aufnahme eines NIR Spektrums als Messmethode zur Bestimmung der Abriebfestigkeit wird an einer Holzwerkstoffplatte vorgenommen, auf der eine dünne Harzschicht mit abriebfesten Partikeln aufgetragen ist. Es wird damit den Zusammenhang zwischen der Harzschicht, die abriebfeste Partikel enthält, und der Abriebfestigkeit der Beschichtung nach dem Aushärten ermittelt. Bei diesen Verfahren ist es sehr problematisch den Feststoffgehalt in der Harzschicht zu bestimmen, weil die vorhandenen Pigmente nicht rückstandlos verascht werden.

Der vorliegenden Erfindung liegt daher die technische Aufgabe zugrunde, ein einfaches, aber effizientes Verfahren bereitzustellen, mit dem der Gehalt an anorganischen Feststoffpartikeln in einer Harzlösung im Rahmen eines Herstellungsprozesses von beschichteten Holzwerkstoffplatten in einfacher und schneller Weise hinreichend genau bestimmt bzw. vorhergesagt werden kann. Zudem sollte das Verfahren keine erhöhten Sicherheitsstandards an die Anlagentechnik erfordern und eine möglichst geringe Fehleranfälligkeit aufweisen. Die gestellte Aufgabe wird erfindungsgemäß durch ein Verfahren mit den Merkmalen des Anspruchs 1 gelöst.

Demnach wird ein Verfahren zur Bestimmung des Gehaltes von anorganischen Feststoffpartikeln in mindestens einer Harzlösung bereitgestellt. Das Verfahren umfasst die folgenden Schritte:
- Aufnehmen von mindestens einem NIR-Spektrum von mindestens einer Probe derfeststoffpartikelhaltigen Harzlösung unter Verwendung von mindestens einem NIR-Detektor in einem Wellenlängenbereich zwischen 500 nm und 2500 nm, bevorzugt zwischen 700 nm und 2000 nm, insbesondere bevorzugt zwischen 900 nm und 1700 nm;
- Bestimmen des Gehaltes an anorganischen Feststoffpartikeln in der Harzlösung in der mindestens einen Probe durch Vergleich des für die mindestens eine Probe ermittelten NIR-Spektrums mit mindestens einem für mindestens eine Referenzprobe mit bekanntem Gehalt an anorganischen Feststoffpartikeln ermittelten NIR-Spektrums mittels einer multivarianten Datenanalyse (MDA),
- wobei das mindestens eine für die mindestens eine Referenzprobe ermittelte NIR-Spektrum mit bekanntem Gehalt an anorganischen Feststoffpartikeln unter Verwendung desselben NIR-Detektors in einem Wellenlängenbereich zwischen 500 nm und 2500 nm, bevorzugt zwischen 700 nm und 2000 nm, insbesondere bevorzugt zwischen 900 nm und 1700 nm vorher bestimmt wurde.

Das vorliegende Verfahren ermöglicht demnach die Bestimmung des Gehaltes an anorganischen Feststoffpartikeln in einer Harzlösung, insbesondere einer wässrigen Harzlösung, oder auch einer Harzsuspension.

Ein wesentlicher Aspekt des vorliegenden Verfahrens ist die Verwendung von NIR-Strahlung, die mit der zu analysierenden Probe wechselwirkt. Dabei wird das NIR-Signal in die Probe eingestrahlt, an den Feststoffpartikeln wieder reflektiert bzw. gestreut und am Messkopf detektiert. Bei dieser Messung werden in einer Sekunde Dutzende NIR-Messungen durchgeführt, sodass auch eine statistische Absicherung der Werte gewährleistet wird. Die NIR-Spektroskopie zusammen mit der Multivariaten Datenanalyse bietet die Möglichkeit, einen direkten Bezug zwischen den spektralen Informationen (NIR-Spektren) und dem Feststoffgehalt im flüssigen Material herzustellen.

Die Kalibrierung erfolgt durch Aufnahme eines NIR-Spektrums von einer Ansatzprobe aus dem Auftragsbehälter. Diese Probe wird auf ihren Feststoffgehalt z.B. durch Veraschen der Probe vorher bestimmt und dem Spektrum zugeordnet. Auf diese Weise werden mehrere Referenzspektren von Ansatzproben mit unterschiedlichem Feststoffgehalt aufgenommen. Die Erstellung des Kalibriermodells, das den Zusammenhang zwischen den NIR-Spektren und den dazugehörigen Feststoffgehalten beschreibt, erfolgt mit dem multivariaten Regressionsverfahren (z. B. mit MLR, PCR, PLS). Dies geschieht mit einer geeigneten Analysesoftware z. B. mit The Unscrambler der Firma CAMO. Dabei erfolgt die Auswertung bevorzugt über das gesamte Spektrum. Das erstellte Kalibriermodell wird zu Ermittlung (Vorhersage) des Feststoffgehaltes neuer Proben genutzt.

Aus dem vorliegenden Verfahren ergeben sich diverse Vorteile. So wird eine sofortige Information über die Zusammensetzung des Ansatzes bereitgestellt, die Personalkosten (Arbeitszeit) und Energiekosten können reduziert werden; die Ergebnisse werden nicht durch Wärmeexplosion verfälscht; Gefahren durch Verbrennungen und Säure werden minimiert bzw. ausgeschaltet.

Das vorliegende Verfahren zur Bestimmung des Gehaltes an anorganischen Feststoffpartikeln in einer Harzlösung, unter Verwendung eines NIR-Detektors, nutzt insbesondere den Umstand aus, dass die NIR-Strahlung von den anorganischen Feststoffpartikeln diffus reflektiert wird. Bei der diffusen Reflexion wird das einfallende Licht größtenteils an der Partikeloberfläche in alle Richtungen reflektiert. Die von den Feststoffpartikeln reflektierte Strahlung wird von dem NIR-Detektor erfasst und zur Bestimmung der Feststoffgehaltes verwendet.

Ein ähnlicher Ansatz der Verwendung von NIR-Spektroskopie zur Bestimmung des Feststoffgehaltes einer Harzlösung wird in der US 2007/0222100 A1 beschrieben. Hier wird die NIR-Spektroskopie für eine dynamische Überwachung und Steuerung des Anteils von Harzfeststoffen in der kontinuierlichen Produktion von Holzwerkstoffprodukten angewendet. Insbesondere erfolgen eine Inlineüberwachung von Harzfeststoffen in einem Harz-Zufuhrstrom und eine Steuerung der Harzbeladung von Holzpartikeln. Bei den Feststoffen handelt es sich somit in erster Linie um organische Feststoffe (Harzfeststoffe). Organische Feststoffe können Harze sein, die eine geringe Löslichkeit in Wasser aufweisen. Im Falle von organischen Feststoffen wird die NIR-Strahlung vom Feststoff absorbiert, während im Falle der vorliegenden anorganischen Feststoffpartikel die NIR-Strahlung von den Partikeln reflektiert wird.

NIR-Absorptionsspektren sind typischerweise informationsreicher und somit komplexer als Streuspektren, da die Form der aufgenommenen Spektren in erster Linie von der verwendeten Harzlösung abhängig ist und hauptsächlich durch die Absorption der Strahlung durch die funktionellen Gruppen des Harzes bestimmt wird.

Die anorganischen Feststoffe sind für die NIR-Messung inaktiv und können die NIR-Strahlung nicht absorbieren. Die NIR-Strahlung wird an den anorganischen Partikeln gestreut. Die Streuung des NIR-Lichtes ist wellenlängenabhängig und nimmt mit steigender Wellenlänge ab. Damit verändert sich die Streuung über das gesamte Spektrum. Der Einfluss der Streuung auf die Form der Spektren macht sich durch die Verschiebung der Basislinie oder/und durch das lineare Offset (Steigung) der Spektren bemerkbar. Die Auswertung und Kalibrierung muss daher über das gesamte aufgenommene Spektrum erfolgen und erfordert in meisten Fällen eine Vorbehandlung der spektralen Daten, die neben den Absorptionseffekten auch die Streueffekte berücksichtigt (z. B. Kubelka-Munk-Transformation oder derivative Vorbehandlung). Weiterhin erfordert die MDA basierte Modellentwicklung auf Basis der Lichtstreuung in meisten Fällen relativ hohe Anzahl der Hauptkomponenten (ca. 10), um den Bezug auf die Streuinformationen zu erhöhen. Bei der Mengenbestimmung der organischen Partikel wird nur die Absorption berücksichtigt und die Streuung wird als Störfaktor angesehen.

In einer Ausführungsform des vorliegenden Verfahrens ist die feststoffpartikelhaltige Harzlösung zur Ausbildung einer Harzschicht, insbesondere einer Verschleißschicht auf mindestens einer Trägerplatte, vorgesehen. Die feststoffpartikelhaltige Harzlösung wird insbesondere während eines kontinuierlichen Beschichtungsprozess der Trägerplatten auf dieselbige aufgetragen.

Die mindestens eine Trägerplatte, ist bevorzugt eine Holzwerkstoffplatte, insbesondere eine mitteldichte Faser (MDF)-, hochdichte Faser (HDF)- oder Grobspan (OSB)- oder Sperrholzplatte, eine Zementfaserplatte und/oder Gipsfaserplatte, eine Magnesiumoxid-Platte, eine Holz-Kunststoff-Platte (WPC) und/oder eine Kunststoffplatte.

In einer weiteren Ausführungsform des vorliegenden Verfahrens wird die mindestens eine Probe der feststoffpartikelhaltigen Harzlösung aus mindestens einem Auftragsbehälter, als Teil einer Vorrichtung zum Auftragen der feststoffpartikelhaltigen Harzlösung auf die mindestens eine Trägerplatte, entnommen.

Die Auftragsvorrichtung umfasst mindestens einen Auftragsbehälter und mindestens ein Auftragswerk, die miteinander über ein geeignetes Schlauch- und Pumpensystem verbunden sind. Der mindestens eine Auftragsbehälter liegt gemäß einer Variante in Form eines trichterförmigen Behälters mit einem Aufnahmevolumen zwischen 20 und 50 l, bevorzugt zwischen 30 und 40 l vor. Der Auftragsbehälter ist vorteilhafterweise doppelwandig gebaut, sodass durch ein Kühlmittel zwischen den Schichten, eine konstante Temperatur im Behälter gewährleistet wird. Im Auftragsbehälter wird die feststoffpartikelhaltige Harzlösung kontinuierlich gerührt und über ein geeignetes Schlauch- und Pumpensystem zum Auftragswerk gefördert.

Das mindestens eine Auftragswerk zum Auftragen der feststoffpartikelhaltigen Harzlösung auf die Trägerplatte umfasst mindestens zwei Walzen, mindestens eine Auftragswalze und mindestens eine Dosierwalze. Der Ansatz aus feststoffpartikelhaltiger Harzlösung wird gleichmäßig über drei Rohre "zwischen" die Auftrags- und Dosierwalze gegeben und durch einen definierten Spalt zwischen den beiden Walzen auf die Platte übertragen. Überschüssiger Ansatz wird zurück in den Auftragsbehälter gefördert.

In einer weiteren Ausführungsform des vorliegenden Verfahrens erfolgt die Bestimmung des NIR-Spektrums der feststoffpartikelhaltigen Harzlösung offline. Eine feststoffpartikelhaltige Harzprobe wird aus dem Auftragsbehälter entnommen und in einer Aluschale eingewogen. Dabei ist zu beachten, dass immer eine definierte Menge (10 g) genutzt wird. Nach 5 Minuten Wartezeit wird die Probe in einem NIR-Messgerät vermessen und der Feststoffgehalt ausgegeben.

Für die Kalibrierung der vorliegenden Messmethode wird von einer Referenzprobe sowohl ein NIR-Spektrum aufgenommen als auch der Feststoffgehalt mittels Veraschung bestimmt.

In einer bevorzugten Ausführungsform des vorliegenden Verfahrens ist die Probe mit bekanntem Gehalt an anorganischen Feststoffpartikeln gleichartig zu der zu vermessenden Probe der feststoffpartikelhaltigen Harzlösung; d.h. die Zusammensetzung der zu vermessenden Probe und der Referenzprobe sind gleichartig.

Die Referenzprobe umfasst demnach bevorzugt eine Harzlösung, insbesondere eine wässrige Harzlösung, mit einem Gehalt an anorganischen Feststoffen zwischen 0,1 und 50 Gew%.

In den jeweiligen Referenzproben wird der Gehalt an anorganischen Feststoffpartikeln zunächst mittels Veraschung nach internen Vorgaben bestimmt. Dabei ist zu bevorzugen, wenn der Feststoffgehalt der Harzlösung der Referenzprobe anhand von mindestens einer, bevorzugt mindestens vier oder mehr der Referenzprobe entnommenen Einzelproben bestimmt wird. Parallel zur Bestimmung des Feststoffgehaltes mittels Veraschung werden von den einzelnen Referenzproben NIR-Spektren aufgenommen und diese den jeweilig mittels Veraschung bestimmten Feststoffgehalt zugeordnet.

Wie erwähnt, wird für die Kalibrierung dieser Messmethode von der feststoffhaltigen Referenzprobe ein NIR-Spektrum aufgenommen. Im nächsten Schritt wird der Feststoffgehalt der mit dem NIR vermessenen Referenzprobe durch die Veraschung im Muffelofen und anschließender Behandlung mit halbkonzentrierter Salzsäure bestimmt. Der Gehalt wird dann dem entsprechenden Spektrum zugeordnet. Aus den gewonnenen Daten wird ein Kalibriermodell mittels MDA entwickelt. Dieses Modell wird zur Bestimmung der neuen Proben verwendet.

In einer Ausführungsform des vorliegenden Verfahrens umfasst die mindestens eine Harzlösung mindestens ein wärmehärtbares Harz. Das wärmehärtbare Harz ist bevorzugt ein formaldehydhaltiges Harz, insbesondere ein Melamin-Formaldehyd-Harz, ein Melamin-Harnstoff-Formaldehyd-Harz oder ein Harnstoff-Formaldehyd-Harz.

Das wärmehärtbare Harz kann dabei neben den abriebfesten anorganischen Feststoffpartikeln, auch natürliche und/oder synthetische Fasern und weitere Additive enthalten.

Die in der mindestens einen Harzlösung, insbesondere eines wärmehärtbaren Harzes, enthaltenen abriebfesten Partikel, sind insbesondere ausgewählt aus der Gruppe enthaltend Aluminiumoxide (z. B. Korund), Borcarbide, Borate, Siliziumdioxide (z. B. Glaskugeln) oder Siliziumcarbide.

In einer Ausführungsform des vorliegenden Verfahrens beträgt der Anteil an anorganischen Feststoffpartikeln in der Harzlösung zwischen 0,1 und 50 Gew%, bevorzugt zwischen 10 und 40 Gew%, insbesondere bevorzugt zwischen 20 und 30 Gew%.

Es ist weiterhin bevorzugt, wenn die anorganischen Feststoffpartikel eine Größe zwischen 10 und 200 µm, bevorzugt zwischen 30 und 150 µm, insbesondere bevorzugt zwischen 50 und 100 µm aufweisen.

Wie erwähnt, kann die Harzlösung z.B. in Form eines wärmehärtbaren Harzes auch natürliche oder synthetische Fasern, ausgewählt aus der Gruppe enthaltend Holzfasern, Zellulosefasern, partiell gebleichte Zellulosefasern, Wollfasern, Hanffasern und organische oder anorganische Polymerfasern, enthalten. Als weitere Additive können Flammschutzmittel und/oder lumineszierende Stoffe zugegeben werden. Geeignete Flammschutzmittel können ausgewählt sein aus der Gruppe enthaltend Phosphate, Borate, insbesondere Ammoniumpolyphosphat, Tris(tribromneopentyl)phosphat, Zinkborat oder Borsäurekomplexe von mehrwertigen Alkoholen. Als lumineszierende Stoffe können fluoreszierende oder phosphoreszierende Stoffen, insbesondere Zinksulfit und Alkalialuminate zum Einsatz kommen.

Ein Verfahren zur Herstellung einer Verschleißschicht unter Verwendung einer Harzlösung aus einem wärmehärtbaren Harz (Flüssigoverlay) ist unter anderem in der EP 233 86 93 A1 beschrieben. In dem darin beschriebenen Beispiel erfolgt zunächst nach Reinigung der Oberfläche einer Holzwerkstoffplatte das Aufbringen einer ersten oberen, abriebfeste Partikel (z.B. Korundpartikel) enthaltenen Harzlösung als erste Harzschicht auf eine Holzwerkstoffplatte als Trägerplatte, ein Trocknen dieser ersten Harzschicht, z.B. bis auf eine Restfeuchte von 3-6 Gew%, anschließendes Aufbringen einer zweiten, Zellulosefasern enthaltenen Harzlösung als zweite Harzschicht auf die Holzwerkstoffplatte, wiederholtes Trocknen bzw. Antrocknen der zweiten Harzschicht, z.B. bis auf eine Restfeuchte von 3-6 Gew%, Aufbringen einer mindestens dritten Glaspartikel enthaltenen Harzlösung als dritte Harzschicht auf die Holzwerkstoffplatte mit anschließendem Antrocknen der dritten Harzschicht, z.B. ebenfalls auf eine Restfeuchte von 3-6 Gew% und ein finales Verpressen des Schichtaufbaus unter Druck- und Temperatureinfluss.

Entsprechend kann die mindestens eine Verschleißschicht, z.B. in Form der hier beschriebenen wärmehärtbaren Harzschicht, mindestens zwei Lagen, bevorzugt mindestens drei nacheinander aufgetragene Lagen umfassen. Dabei ist die Auftragsmenge der Lagen gleich oder verschieden und kann jeweils zwischen 1 und 50 g/m², bevorzugt zwischen 2 und 30 g/m², insbesondere zwischen 5 und 15 g/m², betragen.

Das Flüssigoverlay wird bevorzugt auf die Oberseite der Holzwerkstoffplatte aufgetragen; auf die Rückseite der Holzwerkstoffplatte erfolgt bevorzugt der Auftrag eines flüssigen Gegenzuges.

Die Erfindung wird nachfolgend unter Bezugnahme auf die Figuren der Zeichnungen an einem Ausführungsbeispiel näher erläutert. Es zeigen:
- Figur 1: eine schematische Darstellung einer Auftragsvorrichtung für eine feststoffpartikelhaltige Harzlösung zur Beschichtung einer Trägerplatte;
- Figur 2: ein Diagramm, welches den Anstieg des Gehaltes an Feststoffpartikeln in einer Harzlösung zeigt, die in der Auftragsvorrichtung der Figur zirkuliert;
- Figur 3: ein Diagramm mit NIR-Spektren von Proben mit unterschiedlichem Gehalt an Feststoffpartikeln; und
- Figur 4: ein Kalibrationsmodell zur Bestimmung des Gehaltes an Feststoffpartikeln.

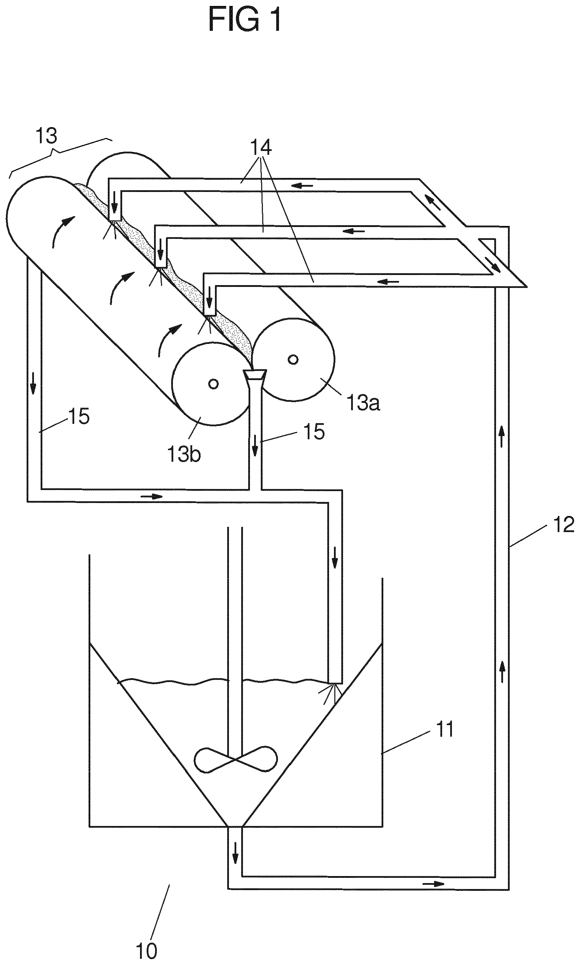

Die in Figur 1 gezeigte Auftragsvorrichtung 10 umfasst einen Auftragsbehälter 11 zur Aufnahme der aufzutragenden Harzlösung und ein Auftragswerk 13, wobei Letzteres eine Dosierwalze 13a und eine Auftragswalze 13b umfasst.

Das zum Auftragen verwendete flüssige Melamin-Formaldehyd-Harz wird zunächst in einer Dosieranlage (nicht gezeigt) nach einem festgelegten Rezept angesetzt und in regelmäßigen Abständen über ein Pumpensystem zum (trichterförmigen) Auftragsbehälter 11 (Volumen 40l) gefördert. Das Melamin-Formaldehyd-Harz weist z.B. verschleißhemmende Partikel (z.B. Korund, Glaskugeln) mit einem Gew.-% zwischen 0,1 - 50% und in der Größe zwischen 10 - 200 µm auf. Der Auftragsbehälter 11 ist doppelwandig gebaut, sodass durch ein Kühlmittel zwischen den Schichten, eine konstante Temperatur im Behälter gewährleistet wird. Über ein Pumpensystem wird der Behälter durch einen Einlauf mit neuem Ansatz versorgt. Die Abnahme des Ansatzes erfolgt am unteren Teil des Behälters.

Über ein Schlauch- und Pumpensystem 12 wird der Ansatz zum Auftragswerk 13 gefördert. Der Ansatz wird gleichmäßig über drei Rohre 14 "zwischen" die Auftragswalze 13a und Dosierwalze 13b gegeben und durch einen definierten Spalt zwischen den beiden Walzen auf die Platte übertragen. Überschüssiger Harzansatz wird (durch die Abstreifer an den Enden der Walzen) in Rücklaufrinnen 15 zurück in den Auftragsbehälter 11 gefördert.

Um zu verhindern, dass grobe Rückstände aus den Rücklaufrinnen 15 in den Auftragsbehälter 11 gelangen, wird der Rücklauf durch ein Sieb (nicht gezeigt) in den Auftragsbehälter 11 geleitet.

Der recycelte Harzansatz kann im Auftragsbehälter 11 mit einem neuen Harzansatz gemischt, wieder über das Pumpsystem 12 bis zum Auftragswerk 13 befördert und der Zyklus wiederholt werden.

### Ausführungsbeispiel 1: Referenzprobe

Es wird eine wässrige Melamin-Formaldehyd-Harzlösung (60 % Feststoffgehalt) mit einem Korundgehalt von 25 Gew.-% in einem Auftragsbehälter vorgelegt und über die Auftragsvorrichtung auf eine Holzwerkstoffplatte aufgetragen. Überschüssige Harzlösung wird von der Auftragsvorrichtung zurück in den Auftragsbehälter zurückgeführt und recycelt.

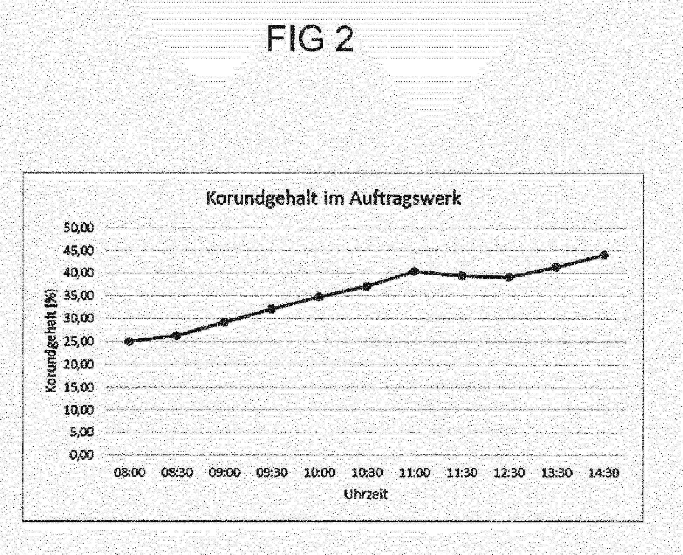

In regelmäßigen Abständen von 30 Minuten werden über einen Gesamtzeitraum von 6 Stunden Proben aus dem Auftragsbehälter entnommen und einer Veraschung zugeführt: Hierfür werden die Proben in einem Muffelofen bei 650°C für 6 Stunden erhitzt. Die organischen Bestandteile (Harz, Cellulose) der Probe werden dabei verascht. Der Glührückstand spiegelt den Korundgehalt der Probe wieder. Wie in Tabelle 1 und dem Diagramm der Figur 2 gezeigt, steigt der Korundgehalt der vermessenen Proben kontinuierlich an.

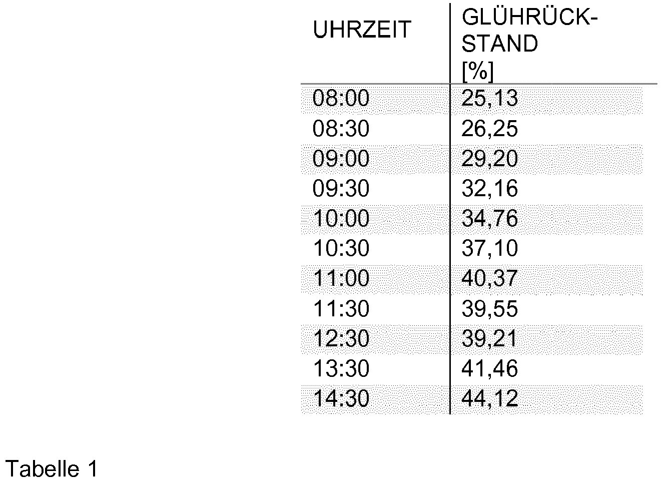

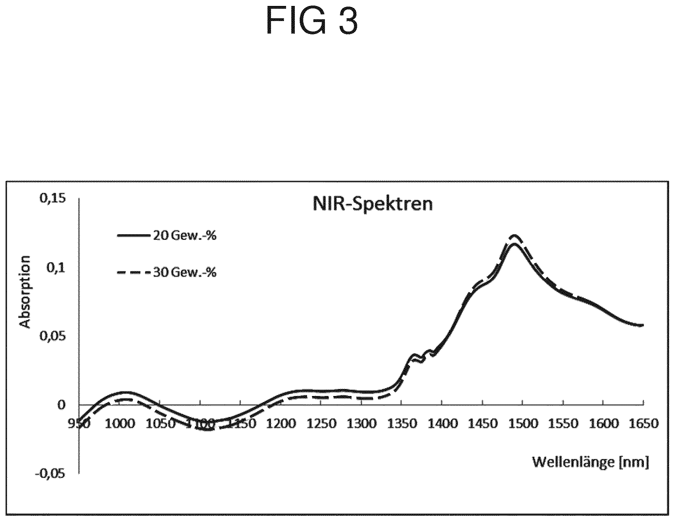

In Figur 3 sind zwei NIR-Spektren von Proben mit unterschiedlichen Feststoffgehalten dargestellt. Die aufgenommenen NIR-Spektren der Referenzproben beinhalten neben den chemischen Informationen aus der Absorption durch chemische Bindungen, auch Informationen über die physikalische Beschaffenheit und Morphologie der Proben aus der Streuung des NIR-Lichtes an den Feststoffpartikeln.

Bei den Spektren ist eine leichte Formveränderung der Spektren erkennbar, die auf die Streuung an den Feststoffpartikeln zurückzuführen ist. Dabei nimmt insbesondere bei kürzeren Wellenlängen die Streuung des NIR-Lichtes mit steigendem Feststoffgehalt zu. So zeigt das Spektrum der Probe mit 30 Gew.-% Korundgehalt höhere Absorptionswerte bei längeren Wellenlängen und niedrigere Absorptionswerte bei kürzeren Wellenlängen als das Spektrum der Proben mit 20 Gew.-%.

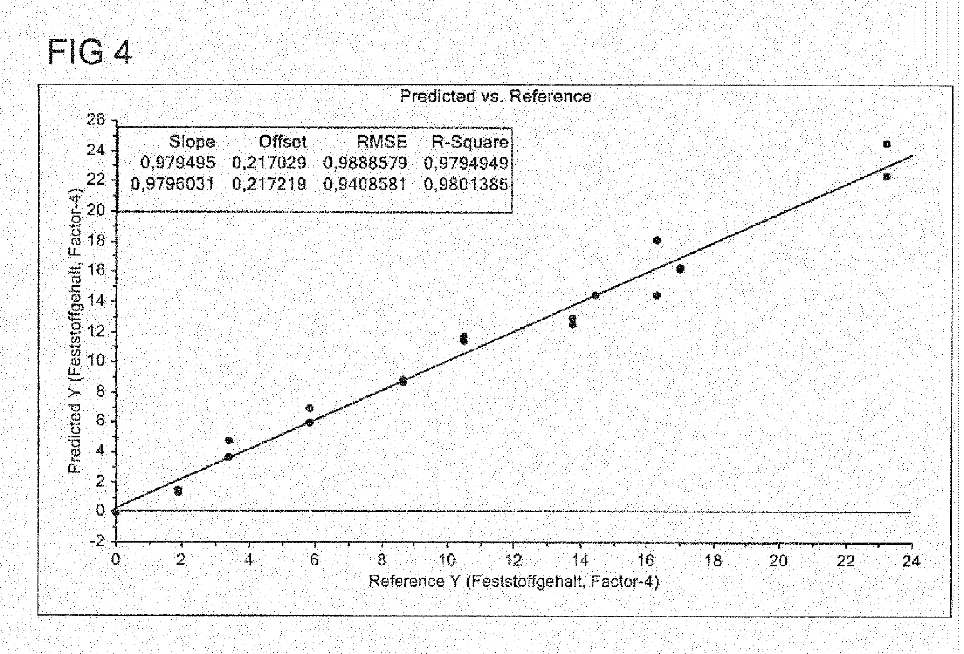

In der Figur 4 wird ein Kalibrationsmodell gezeigt, das zur Bestimmung des Korundgehaltes in der flüssigen Harzlösung genutzt werden kann.

Unter Heranziehung dieses Kalibrationsmodells wird anschließend das Korundgehalt einer Harzlösung mitttels NIR-Messung bestimmt. So wird für eine unbekannte Probe ein Korundgehalt von 14,69 Gew.-% ermittelt. Durch das anschließende Veraschen der Probe wurde ein Korundgehalt dieser Probe von 14,45 Gew.-% bestimmt.

## Patentansprüche

1. Verfahren zur offline Bestimmung des Gehaltes von anorganischen Feststoffpartikeln in mindestens einer wässrigen Harzlösung ,
wobei die anorganischen Feststoffpartikel ausgewählt sind aus der Gruppe enthaltend Aluminiumoxide (Korund), Borcarbide, Borate, Siliziumdioxide und Siliziumcarbide.
wobei die mindestens eine Harzlösung zur Ausbildung einer Verschleißschicht auf mindestens einer Trägerplatte vorgesehen ist und während eines kontinuierlichen Beschichtungsprozesses auf die mindestens eine Trägerplatte aufgetragen wird,
wobei die Harzlösung vor dem Auftrag in mindestens einem Auftragsbehälter als Teil einer Vorrichtung zum Auftragen der feststoffpartikelhaltigen Harzlösung auf die mindestens eine Trägerplatte vorgelegt wird,
wobei zur Bestimmung des Gehaltes an anorganischen Feststoffpartikeln in der Harzlösung mindestens eine zu analysierende Probe der feststoffpartikelhaltigen Harzlösung aus dem mindestens einem Auftragsbehälter entnommen wird,
wobei der Anteil an anorganischen Feststoffpartikeln in der Harzlösung zwischen 10 und 50 Gew% beträgt,
umfassend die Schritte
- Aufnahme von mindestens einem NIR-Spektrum von mehreren Referenzproben mit unterschiedlichem Feststoffgehalt unter Verwendung von mindestens einem NIR-Detektor in einem Wellenlängenbereich zwischen 500 nm und 2500 nm, bevorzugt zwischen 700 nm und 2000 nm, insbesondere bevorzugt zwischen 900 nm und 1700 nm;
- Bestimmung des Feststoffgehaltes der genannten Referenzproben mittels Veraschung;
- Zuordnung der bestimmten Feststoffgehalte zu den aufgenommenen NIR-Spektren der genannten Referenzproben;
- Erstellung eines Kalibriermodells für den Zusammenhang zwischen den spektralen Daten der NIR-Spektren und den dazugehörigen Feststoffgehalten mittels einer multivariaten Datenanalyse;
- Aufnahme von mindestens einem NIR-Spektrum von der mindestens einen Probe der feststoffpartikelhaltigen Harzlösung unter Verwendung von demselben NIR-Detektor in einem Wellenlängenbereich zwischen 500 nm und 2500 nm, bevorzugt zwischen 700 nm und 2000 nm, insbesondere bevorzugt zwischen 900 nm und 1700 nm; und
- Ermittlung des Feststoffgehaltes der genannten mindestens einen Probe mittels des genannten mindestens einen NIR-Spektrums der genannten mindestens einen Probe und des erstellten Kalibriermodells.

2. Verfahren nach Anspruch 1, **dadurch gekennzeichnet, dass** die mindestens eine Trägerplatte eine Holzwerkstoffplatte, insbesondere eine mitteldichte Faser (MDF)-, hochdichte Faser (HDF)- oder Grobspan (OSB)- oder Sperrholzplatte ist, eine Zementfaserplatte und/oder Gipsfaserplatte, eine Magnesiumoxid-Platte, eine Holz-Kunststoff-Platte (WPC) und/oder eine Kunststoffplatte ist.

3. Verfahren nach einem der vorhergehenden Ansprüche, **dadurch gekennzeichnet, dass** die mindestens eine Harzlösung mindestens ein wärmehärtbares Harz umfasst.

4. Verfahren nach Anspruch 3, **dadurch gekennzeichnet, dass** das wärmehärtbare Harz ein formaldehydhaltiges Harz, insbesondere ein Melamin-Formaldehyd-Harz, ein Melamin-Harnstoff-Formaldehyd-Harz oder ein Harnstoff-Formaldehyd-Harz ist,

5. Verfahren nach einem der vorhergehenden Ansprüche, **dadurch gekennzeichnet, dass** der Anteil an anorganischen Feststoffpartikeln in der Harzlösung zwischen 10 und 40 Gew%, insbesondere bevorzugt zwischen 20 und 30 Gew% beträgt.

6. Verfahren nach einem der vorhergehenden Ansprüche, **dadurch gekennzeichnet, dass** die anorganischen Feststoffpartikel eine Größe zwischen 10 und 200 µm, bevorzugt zwischen 30 und 150 µm, insbesondere bevorzugt zwischen 50 und 100 µm aufweisen.

## Claims

1. Method for the offline determination of the content of inorganic solid particles in at least one aqueous resin solution,
wherein the inorganic solid particles are selected from the group consisting of aluminum oxides (corundum), boron carbides, borates, silicon dioxides and silicon carbides,
wherein said at least one resin solution is provided to form a wear layer on at least one support plate and is applied to said at least one support plate during a continuous coating process,
wherein the resin solution is provided prior to application in at least one application container as part of a device for applying the solid particle-containing resin solution to the at least one support plate,
wherein at least one sample of the solid particle-containing resin solution to be analysed is taken from the at least one application container in order to determine the content of inorganic solid particles in the resin solution,
wherein the amount of inorganic solid particles in the resin solution is between 10 and 50% by weight,
comprising the steps
- Recording of at least one NIR spectrum from several reference samples with different solid contents using at least one NIR detector in a wavelength range between 500 nm and 2500 nm, preferably between 700 nm and 2000 nm, in particular preferably between 900 nm and 1700 nm;
- Determining the solids content of said reference samples by ashing;
- Assigning the determined solid contents to the recorded NIR spectra of said reference samples;
- Creating a calibration model for the relationship between the spectral data of the NIR spectra and the assigned solid contents by means of multivariate data analysis;
- Recording of at least one NIR spectrum from the at least one sample of the solid particle-containing resin solution using the same NIR detector in a wavelength range between 500 nm and 2500 nm, preferably between 700 nm and 2000 nm, in particular preferably between 900 nm and 1700 nm; and
- Determining the solids content of the said at least one sample using the said at least one NIR spectrum of the said at least one sample and the calibration model produced.

2. Method according to claim 1, **characterized in that** the at least one support plate is a wood-based panel, in particular a medium density fibre (MDF), high density fibre (HDF) or coarse chip (OSB) or plywood panel, a cement fibre panel and/or gypsum fibre panel, a magnesium oxide panel, a wood-plastic panel (WPC) and/or a plastic panel.

3. Method according to any of the preceding claims, **characterized in that** the at least one resin solution comprises at least one thermosetting resin.

4. Method according to claim 3, **characterized in that** the thermosetting resin is a formaldehyde-containing resin, in particular a melamine-formaldehyde resin, a melamine-urea-formaldehyde resin or a urea-formaldehyde resin,

5. Method according to one of the preceding claims, **characterized in that** the amount of inorganic solid particles in the resin solution is between 10 and 40% by weight, in particular preferably between 20 and 30% by weight.

6. Method according to one of the preceding claims, **characterized in that** the inorganic solid particles have a size between 10 and 200 µm, preferably between 30 and 150 µm, in particular preferably between 50 and 100 µm.

## Revendications

1. Procédé servant à définir hors ligne la teneur de particules de matières solides inorganiques dans au moins une solution de résine aqueuse,
dans lequel les particules de matières solides inorganiques sont choisies parmi le groupe contenant des oxydes d'aluminium (corindon), des carbures de bore, des borates, de dioxydes de silicium et des carbures de silicium,
dans lequel l'au moins une solution de résine est prévue pour réaliser une couche d'usure sur au moins un panneau de support et est appliquée sur l'au moins un panneau de support pendant un processus de revêtement continu,
dans lequel la solution de résine est présentée avant l'application dans au moins un contenant d'application en tant que partie d'un dispositif servant à appliquer la solution de résine contenant des particules de matières solides sur l'au moins un panneau de support,
dans lequel, pour définir la teneur en particules de matières solides inorganiques dans la solution de résine, au moins un échantillon à analyser de la solution de résine contenant des particules de matières solides est prélevé de l'au moins un contenant d'application,
dans lequel la teneur en particules de matières solides inorganiques dans la solution de résine est entre 10 et 50 % en poids,
comprenant les étapes
- d'enregistrement d'au moins un spectre NIR de plusieurs échantillons de référence avec une teneur en matières solides différente en utilisant au moins un détecteur NIR dans une plage de longueurs d'onde entre 500 nm et 2500 nm, de manière préférée entre 700 nm et 2000 nm, en particulier de manière préférée entre 900 nm et 1700 nm ;
- de définition de la teneur en matières solides des échantillons de référence mentionnés au moyen d'une incinération ;
- d'association des teneurs en matières solides définies aux spectres NIR enregistrés des échantillons de référence mentionnés ;
- de création d'un modèle d'étalonnage pour le lien entre les données spectrales des spectres NIR et les teneurs en matières solides afférentes au moyen d'une analyse de données multivariée ;
- d'enregistrement d'au moins un spectre NIR de l'au moins un échantillon de la solution de résine contenant des particules de matières solides en utilisant le même détecteur NIR dans une plage de longueurs d'onde entre 500 nm et 2500 nm, de manière préférée entre 700 nm et 2000 nm, en particulier de manière préférée entre 900 nm et 1700 nm ; et
- de détermination de la teneur en matières solides de l'au moins un échantillon mentionné au moyen de l'au moins un spectre NIR mentionné de l'au moins un échantillon mentionné et du modèle d'étalonnage créé.

2. Procédé selon la revendication 1, **caractérisé en ce que** l'au moins un panneau de support est un panneau de matériau dérivé du bois, en particulier un panneau de fibres à moyenne densité (MDF), un panneau de fibres à densité élevée (HDF) ou un panneau de grandes particules orientées (OSB) ou un panneau de contreplaqué, un panneau en fibres de ciment et/ou un panneau en fibres de plâtre, un panneau en oxyde de magnésium, un panneau composite bois-plastique (WPC) et/ou un panneau en matière plastique.

3. Procédé selon l'une quelconque des revendications précédentes, **caractérisé en ce que** l'au moins une solution de résine comprend au moins une résine pouvant être durcie à chaud.

4. Procédé selon la revendication 3,
**caractérisé en ce que** la résine pouvant être durcie à chaud est une résine contenant du formaldéhyde, en particulier une résine de mélamine-formaldéhyde, une résine mélamine-urée-formaldéhyde ou une résine urée-formaldéhyde.

5. Procédé selon l'une quelconque des revendications précédentes, **caractérisé en ce que** la fraction en particules de matières solides inorganiques dans la solution de résine est entre 10 et 40 % en poids, en particulier de manière préférée entre 20 et 30 % en poids.

6. Procédé selon l'une quelconque des revendications précédentes, **caractérisé en ce que** les particules de matières solides inorganiques présentent une grandeur entre 10 et 200 µm, de manière préférée entre 30 et 150 µm, en particulier de manière préférée entre 50 et 100 µm.
